# EUROPÄISCHE PATENTSCHRIFT

(11) **EP 1 761 383 B1**
(45) Veröffentlichungstag und Bekanntmachung des Hinweises auf die Patenterteilung: **01.04.2009**
(21) Anmeldenummer: 05752733.5
(22) Anmeldetag: 23.05.2005
(51) Int. Cl.: B32B 27/08

(54) **MEDIZINISCHER BIOSENSOR, MITTELS DEM BIOLOGISCHE FLUSSIGKEITEN UNTERSUCHT WERDEN**
MEDICAL BIOSENSOR BY MEANS OF WHICH BIOLOGICAL LIQUIDS ARE ANALYZED
BIOCAPTEUR MEDICAL A L'AIDE DUQUEL DES LIQUIDES BIOLOGIQUES PEUVENT ETRE EXAMINES

(30) Priorität: 23.06.2004 DE 102004030387
(43) Veröffentlichungstag der Anmeldung: 14.03.2007
(73) Patentinhaber: tesa AG, 20253 Hamburg (DE)
(72) Erfinder: NEUBERT, Ingo, 22850 Norderstedt (DE); BUNDE, Bernd, 20253 Hamburg (DE)
(86) Internationale Anmeldenummer: PCT/EP2005/052347
(87) Internationale Veröffentlichungsnummer: WO 2006/000505

(56) Entgegenhaltungen:
- EP-A- 1 385 002
- EP-A- 1 582 575

## Beschreibung

Die vorliegende Erfindung betrifft einen medizinischen Biosensor, mittels dem biologische Flüssigkeiten untersucht werden, auch medizinischer Diagnosestreifen genannt.

In der modernen Medizindiagnose werden für immer mehr analytische Teststreifen die so genannten Diagnoseteststreifen oder Biosensoren verwendet. Mit diesen kann zum Beispiel der Gehalt an Glukose, Cholesterol, Proteinen, Ketonen, Phenylalanin oder Enzymen in biologischen Flüssigkeiten wie Blut, Speichel und Urin bestimmt werden.

Am häufigsten anzutreffen sind Diagnoseteststreifen zur Bestimmung und Überprüfung des Blutzuckergehaltes bei Diabetikern. Weltweit leiden etwa 175 Millionen Menschen an Diabetes mellitus Typ 1 und Typ 2. Die Tendenz dieser Erkrankung ist steigend.
Bei dieser nicht heilbaren Krankheit überprüfen viele Kranken bis zu 5-mal täglich ihren Blutzuckergehalt, um die Dosierung der Medikamentation (Insulin) sowie die Nahrungsmitteleinnahme optimal aufeinander anzupassen, denn im Falle eines zu hohen Blutzuckergehalts muss mit gesundheitlichen Schäden gerechnet werden. Bisher waren die Diabetiker auf die Unterstützung von medizinischem Personal angewiesen, um den Blutzuckergehalt zu bestimmen. Um die Kontrolle des Blutzuckergehaltes so einfach wie möglich zu gestalten, wurde ein Test entwickelt, der es dem Kranken erlaubt, seinen Blutzuckergehalt, auch ohne auf medizinisches Personal angewiesen zu sein, mit geringsten Aufwand selbst zu bestimmen.
Zur Bestimmung des Blutzuckergehalts muss der Proband einen Bluttropfen auf einen Diagnoseteststreifen geben. Der Diagnoseteststreifen befindet sich dabei in einem Lesebeziehungsweise Auswertegerät. Nach einer Reaktions- oder Ansprechzeit wird auf den Auswertegerät der aktuelle Blutzuckergehalt angezeigt. Entsprechende Lesebeziehungsweise Auswertegeräte sind zum Beispiel in der US 5,304,468 A, der EP 1 225 448 A1 und der WO 03/08091 A1 beschrieben.

Eines der ersten Patente auf dem technischen Feld der Teststreifen ist bereits 1964 erschienen. In US 1,073,596 A werden ein Diagnosetest und die Teststreifen zur Analysierung biologischer Körperflüssigkeiten speziell zur Blutzuckerbestimmung beschrieben. Der Diagnosetest funktioniert über die Bestimmung einer Farbänderung, die durch eine Enzymreaktion ausgelöst wird.

Die Bestimmung einer Konzentrationsänderung eines Farbstoffes (Kolorimetrische Methode) ist auch heute noch ein verwendetes Verfahren bei der Blutzuckerbestimmung mittels Diagnoseteststreifen. Dabei reagiert das Enzym Glukose-Oxidase/Peroxidase mit dem Blutzucker. Das entstehende Wasserstoffperoxid reagiert anschließend mit dem Indikator wie zum Beispiel O-Tolidine, was zu einer Farbreaktion führt. Diese Farbveränderung kann durch kolorimetrische Methoden verfolgt werden. Der Grad der Verfärbung ist direkt proportional zur Blutzuckerkonzentration. Das Enzym befindet sich hier auf einem Gewebe.
Dieses Verfahren wird zum Beispiel in EP 0 451 981 A1 und WO 93/03673 A1 beschrieben.

Die moderne Entwicklung der Diagnoseteststreifen zielt auf eine Verkürzung der Messzeit zwischen der Blutaufgabe auf den Teststreifen und dem Erscheinen des Messwertes. Die Messzeit beziehungsweise die Zeit zwischen Aufgabe des Blutes auf den Diagnosemessstreifen bis zur Anzeige des Messwertes ist neben der eigentlichen Reaktionszeit der Enzymreaktion und der Folgereaktionen ebenfalls erheblich davon abhängig, wie schnell das Blut innerhalb des Diagnosestreifens von der Blutaufgabestelle zum Reaktionsort, das heißt, zum Enzym transportiert wird.

Zur Verkürzung der Messzeit werden unter anderem hydrophil ausgerüstete Vliese oder Gewebe wie in US 6,555,061 B verwendet, um das Blut schneller zum Messbereich (Enzym) zu transportieren. Das Messverfahren ist identisch mit dem in EP 0 451 981 A1 1 beschriebenen. Für den Aufbau des Diagnosestreifens wird ein doppelseitiges Standard-Klebeband Scotch ® 415 verwendet. Oberflächenmodifizierte Gewebe mit einem Dochteffekt für die biologische Flüssigkeit werden in WO 93/03673 A1, WO 03/067252 A1 und US 2002/0102739 A1 beschrieben. Im letzten Zitat wird durch eine Plasmabehandlung des Gewebes ein Bluttransport von 1,0 mm/s erreicht. Bei der Verwendung von Geweben für den Transport der biologischen Testflüssigkeit wie zum Beispiel Blut wird jedoch ein Chromatographieeffekt beobachtet, das heißt, die Einzelbestandteile wie Zellen werden von den flüssigen Bestandteilen getrennt. Der Chromatographieeffekt wird explizit in WO 03/008933 A2 zur separaten Untersuchung der Blutbestandteile ausgenutzt.

Eine Weiterentwicklung zur kolorimetrischen Messmethode ist die elektrische Bestimmung der Änderung des Oxidations-Potentials an einer mit dem Enzym belegten Elektrode. Dieses Verfahren und ein entsprechender Diagnoseteststreifen sind in WO 01/67099 A1 beschrieben. Der Aufbau des Diagnosestreifens erfolgt durch eine Bedruckung von verschiedenen Funktionsschichten wie elektrischen Leitern, Enzym, und Schmelzklebstoff auf das Basismaterial aus zum Beispiel Polyester. Anschließend wird durch thermische Aktivierung des Klebers ein nicht näher beschriebener hydrophiler Film dazukaschiert. Der hydrophile Film dient auch hier zur Beschleunigung des Transports des Bluts zur Messzelle.
Bei diesem Aufbau ist kein Gewebe oder Vlies zum Bluttransport notwendig. Der Vorteil dieses Aufbaus und der Vorteil der neuen Messmethode sind, dass die Messung des Blutzuckergehaltes mit sehr viel weniger Blutvolumen von etwa 5 bis 10 µl und in kürzerer Messzeit stattfinden kann.

In US 5,997,817 A wird ein elektrochemischer Biosensor beschrieben, bei dem der Transport der biologischen Flüssigkeit ebenfalls über eine hydrophile Beschichtung realisiert wird. Bei der Beschichtung handelt es sich um ARCARE 8586 (kommerziell nicht verfügbar) von Adhesive Research Inc. Der Transport der biologischen Flüssigkeit wird in einem speziellen, aber nicht näher beschriebenen Kapillartest bewertet.

In DE 102 34 564 A1 wird ein Biosensor beschrieben, der aus einem planaren Sensor oder Teststreifen und einem kompartimentierten Reaktions- und Messkammeraufsatz, der durch Prägung einer PVC-Folie hergestellt ist, zusammengesetzt ist. Der Messkammeraufsatz besteht aus einem sehr speziellen Prägedesign aus Probeaufnahmekanal, Messkammer, Probenstoppkanal und Probenauffangraum. Die Prägetiefe dieser Kompartimentierung beträgt 10 bis 300 µm. Der Probenaufnahmekanal und die Messkammer werden für den Transport der biologischen Flüssigkeit mit einem hydrophilen Gewebe oder einer Tensidbeschichtung ausgerüstet.

In DE 102 11 204 A1 wird eine Durchflussmesszelle zur kontinuierlichen GlucoseBestimmung beschrieben. Die Messzelle besteht aus einer planer strukturierten Folie, die einen kleinen Einlasskanal und eine wesentlich größeren Auslasskanal bildet, wobei beide Kanäle über einen definierten Winkel ineinander münden.

In US 5,759,364 A ist ein elektrochemischer Sensor beschrieben, der aus einer bedruckten Grundplatte und einer geprägten Deckfolie aus PET oder Polycarbonat besteht. Die konkav-geprägte Deckfolie bildet den Messraum, in dem sich das Enzym für die Nachweisreaktion befindet. Für einen schnellen Bluttransport ist die Unterseite der geprägten Deckfolie mit einem hydrophilen Polymer aus einem Polyurethan-lonomer beschichtet.

In der EP 1 582 575 A1 ist ein beispielhafter Aufbau eines medizinischen Diagnoseteststreifens schematisch dargestellt.
Der Teststreifen 1 setzt sich aus mehreren einzelnen Schichten 2, 3, 4 und 5 zusammen. Auf dem Basismaterial 5 aus 500 µm PET befinden sich mehrere vollflächig aufgedruckte Funktionsschichten 4 aus zum Beispiel leitfähigen Materialien oder Enzymen. Diese Funktionsschicht 4 ist mit dem hydrophilen Toptape 3, in diesem Fall einer 100 µm dicken PET-Folie, die einseitig hydrophil ausgerüstet ist, durch zum Beispiel ein Stanzling eines doppelseitigen Haftklebebands 2 verbunden. Das Haftklebeband 2 selbst weist zwei Haftklebeschichten aus vorzugsweise einer Polyacrylat-Haftklebemasse auf, zwischen denen ein Träger aus PET vorhanden ist. Der Stanzling des Haftklebebands 2 bildet einen Kanal 6, der zum Transport der zu vermessenden biologischen Testflüssigkeit zum Beispiel Blut zur Messzelle notwendig ist.

Die Herstellung der beschriebenen Diagnoseteststreifen geschieht in den meisten Fällen durch eine diskontinuierliche Abfolge von Beschichtungs- und Laminierschritten. Als Basismaterial dient eine 300 bis 500 µm dicke Folie aus Polyvinylchlorid, Polyester oder Polycarbonat mit den Abmaßen von etwa 400 x 400 mm. Für die Funktionstüchtigkeit der Biosensoren ist es notwendig, unter anderem sehr komplizierte Stanzungen an den verschiedenen Materialien durchzuführen oder sehr komplizierte Stanzformen von zum Beispiel Haftklebebändern zu verarbeiten. Daraus ergibt sich ein zum Teil langsamer und komplizierter Herstellprozess.

Es gibt seit einiger Zeit auch Ansätze, die Diagnosestreifen in kontinuierlichen Verfahren herzustellen. Den Beschichtungs- und Laminierschritten folgt gewöhnlich eine Reihe von Schneidvorgängen. Aufgrund der kleinen Abmaße der Diagnosestreifen von ca. 20 mm x 5 mm ist bei den Beschichtungs-, Laminier- und Schneidvorgängen höchste Präzision erforderlich. Das Schneiden zu den Diagnosestreifen geschieht üblicherweise mit sehr hohen Taktraten mit Schneidmaschinen von zum Beispiel der Siebler GmbH oder der Kinematik Inc.
Bei den Schneidvorgängen können erheblich Probleme auftreten. Bei der Verwendung von ungeeigneten Materialien, die bei der Aminierung eine ungenügende Haftung aufeinander aufweisen, wird immer wieder eine Delaminierung im Schneidprozess beobachtet. Diese ungenügende Haftung kann auf eine ungeeignete Klebemasse, das heißt eine Klebmasse mit einer sehr hohen Scherfestigkeit, auf einen ungeeigneten Verklebungsuntergrund beziehungsweise auf eine ungeeignete Beschichtung des Verklebungsuntergrundes zurückgeführt werden. Typische Beschichtungen mit oberflächenaktiven Substanzen wie zum Beispiel Tensiden zur hydrophilen Ausrüstung von Oberflächen führen oft zu diesen Delaminierproblemen im Schneidprozess. Eine relativ gute Haftfestigkeit auf den verschiedenen Verklebungsuntergründen wird erhalten, wenn handelsübliche Haftklebebänder mit geringer oder moderater Scherfestigkeit verwendet werden. In diesem Fall treten aber bereits nach kurzer Zeit Verunreinigungen des Schneidwerkzeuges durch Klebemassereste auf. Diese Verunreinigungen sind bereits nach wenigen Stunden so stark, dass die Messer, Antriebseinheiten und Führungsschienen der Schneidmaschine komplett ausgetauscht und gereinigt werden müssen. Dadurch entstehen erhebliche Kosten durch Wartung und Stillstand.
Die erwähnten Klebemassereste sind auf die verwendeten handelsüblichen Selbstklebebänder zurückzuführen. Durch die Verwendung von nicht selbstklebrigen Schmelzklebstoffen oder Heißsiegelklebstoffen wie zum Beispiel auf Basis von Polyamiden, Polyisobutylen, Polyvinylbutyral, Polyester, Poly(ethersulfon)en, Ethylen/Ethylacrylat-Copolymeren oder Ethylen/Vinylacetat-Copolymeren wird eine Verlängerung der Reinigungsinterwalle erreicht.
Bei der Verwendung von Schmelzklebstoffen werden allerdings erhebliche Nachteile im Aufbau der Diagnoseteststreifen beobachtet. Für die Aktivierung der Schmelzklebstoffe sind Druck und Temperaturen von mindestens 80 °C notwendig. Bei diesen Bedingungen besteht zum einen die Gefahr der thermischen Schädigung der Enzymschicht und eines der verwendeten Gewebe oder Vliese, zum anderen ist die Realisierung eines gleichmäßigen und präzisen Abstands zwischen den Funktionsschichten wie Basisfolie, Gewebe und Deckfilm des Diagnoseteststreifens nicht möglich. Der Abstand zwischen den Funktionsschichten bestimmt das Blutvolumen, das für die Messung verwendet wird. Bei Schwankungen des Blutvolumens bedingt durch eine zu hohe Schwankungsbreite des Abstandes zwischen den Funktionsschichten bei zum Beispiel unterschiedlichen Teststreifenchargen ist eine zuverlässige Bestimmung des Blutzuckergehaltes nicht möglich.

Aufgabe der vorliegenden Erfindung ist, einen medizinischen Biosensor, mittels dem biologische Flüssigkeiten untersucht werden, zur Verfügung zu stellen, der insbesondere im Schneidprozess während der Herstellung zu einer erheblichen Verringerung der Klebemassereste an den Schneidwerkzeugen führt sowie der einen schnellen Transport der biologischen Flüssigkeit und somit eine geringe Messzeit gewährleistet.

Gelöst wird diese Aufgabe durch einen medizinischen Biosensor, wie er im Hauptanspruch niedergelegt ist. Gegenstand der Unteransprüche sind vorteilhafte Weiterentwicklungen des Erfindungsgegenstandes.

Demgemäß betrifft die Erfindung einen medizinischen Biosensor, mittels dem biologische Flüssigkeiten untersucht werden, umfassend zumindest drei Schichten, eine Funktionsschicht, auf der ein beidseitig klebendes Haftklebeband aufgebracht ist, auf dem eine strukturierte Folie aufgebracht ist.
Die Scherfestigkeit der Klebemasse bei 25 °C und 70 °C und einer Gewichtsbelastung von 1000 g ist größer als 10 000 min, und das oder die Polymere der Klebemasse weisen einen K-Wert von größer als 55 auf.
Die Strukturtiefe der strukturierten Folie beträgt 20 bis 150 µm und vorzugsweise 20 bis 80 µm.

Das Haftklebeband kann als Transfer-Haftklebeband ohne Trägerfolie oder als doppelseitiges Fixierklebeband ausgeführt sein, bestehend aus einer Trägerfolie, die beidseitig jeweils mit der Haftklebemasse beschichtet ist.
Die Klebemassen auf der oberen und der unteren Seite des Haftklebebands können identisch sein, können aber auch unterschiedlich gewählt werden, um den jeweiligen Anforderungen gerecht zu werden.
Die Summe des Klebemassenauftrags auf der oberen und der unteren Seite des Trägermaterials des Haftklebebands beträgt in einer ersten vorteilhaften Ausführungsform höchstens 40 g/m², vorzugsweise höchstens 25 g/m² und besonders bevorzugt höchstens 18 g/m².
Weiter vorzugsweise besteht das Haftklebeband aus einer Trägerfolie aus Polyester, die beidseitig vorteilhaft mit höchstens 20 g/m², weiter vorzugsweise mit höchstens 12,5 g/m² einer Klebemasse beschichtet ist.

Die charakteristische Eigenschaft des erfindungsgemäßen Biosensors ergibt sich aus der Kombination zwischen dem Haftklebeband und der strukturierten Folie, wobei die Klebemasse beziehungsweise Haftklebemasse des Haftklebebands eine hohe Kohäsion beziehungsweise Scherfestigkeit aufweisen sollte.

Die hohe Scherfestigkeit der Haftklebemasse äußert sich in einem hohen K-Wert des oder der Polymere beziehungsweise Co-Polymere von größer als 55, bevorzugt von größer als 60, sowie einer hohen Scherfestigkeit von größer 10.000 min bei 70 °C und einer Gewichtsbelastung von 1000 g.

Die hohe Scherfestigkeit der Haftklebemasse spiegelt sich ebenfalls in der Mikroscherwegsuntersuchung wider. Hierbei handelt es sich um eine Methode, bei der innerhalb einer kurzen Messzeit die Scherfestigkeit von Haftklebemassen untersucht werden kann. Der Mikroscherweg µS des Haftklebebandes nach 15 min bei 40 °C unter einer Belastung von 500 g ist vorzugsweise kleiner als 100 µm, weiter vorzugsweise kleiner als 60 µm, besonders bevorzugt kleiner als 30 µm und ganz besonders bevorzugt als 10 µm.
Der Quotient µS2/µS1 als Maß für die Elastizität der Haftklebemasse des Haftklebebandes ist vorzugsweise kleiner als 0,3 und besonders bevorzugt kleiner als 0,2.

Vorteilhaft ist ebenfalls eine dynamische Glasübergangstemperatur der Polymere beziehungsweise Co-Polymere bei 10 rad/s -10 °C bis 15 °C und bevorzugt -6 °C bis 4°C.

Weiter vorzugsweise beträgt die Klebkraft der Klebemasse auf Stahl mindestens 1,5 und vorzugsweise mindestens 2,5 N/cm und/oder die Klebkraft auf PET mindestens 1,0 und vorzugsweise mindestens 2,0 N/cm.

Zur Herstellung der Klebemasse des Haftklebebands mit den beschriebenen Eigenschaften eignen sich Copolymere oder Copolymer-Gemische aus Acrylat-Monomeren oder Styrol-Block-Copolymere mit zum Beispiel Ethylen, Propylen, Butylen, Butadien, Hexen und/oder Hexadien als Comonomeren.

Die Haftklebemasse des Haftklebebands besteht in der bevorzugten Ausführung aus einem oder mehreren Copolymeren aus zumindest den folgenden Monomeren

### c1) 79 bis 100 Gew.-% Acrylsäureester und/oder Methacrylsäureester beziehungsweise deren freie Säuren mit der folgenden Formel

CH₂ = CH(R₁)(COOR₂),

wobei R₁ = H und/oder CH₃ und R₂ = H und/oder Alkylketten mit 1 bis 30 C-Atomen sind.
Auch hier können der zugrunde liegenden Monomermischung als weitere Komponente c2) bis zu 30 Gew.-% olefinisch ungesättigte Monomere mit funktionellen Gruppen zugesetzt sein.

In einer sehr bevorzugten Auslegung werden für die Monomere c1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel t-Butylacrylat und 2-Ethylhexylacrylat.

Weitere Verbindungsklassen, die ebenfalls in geringen Mengen unter c1) hinzugesetzt werden können, sind Methylmethacrylate, Cyclohexylmethacrylate, Isobornylacrylat und Isobomylmethacrylate.

In einer sehr bevorzugten Auslegung werden für die Monomere c2) Vinylester, Vinylether, Vinyl halogenide, Vinylidenhalogenide, Vinylverbindungen mit aromatischen Cyclen und Heterocyclen in α-Stellung eingesetzt.
Auch hier seien einige Beispiele genannt, ohne dass die Aufzählung als abschließend zu betrachten ist:
Vinylacetat, Vinylformamid, Vinylpyridin, Ethylvinylether, Vinylchlorid, Vinylidenchlorid und Acrylonitril.

In einer weiteren sehr bevorzugten Auslegung für die Monomere c2) werden Monomere mit folgenden funktionellen Gruppen eingesetzt:
Hydroxy-, Carboxy-, Epoxy-, Säureamid-, Isocyanato- oder Aminogruppen.

In einer vorteilhaften Variante werden für c2) Acrylmonomere entsprechend der allgemeinen Formel

CH₂ = CH(R₁)(COOR₃),

wobei R₁ = H oder CH₃ ist und der Rest R₃ eine funktionelle Gruppe darstellt oder beinhaltet, welche eine nachfolgende UV-Vernetzung der Haftklebemasse unterstützt, welche zum Beispiel in einer besonders bevorzugten Auslegung eine H-Donor Wirkung besitzt.

Besonders bevorzugte Beispiele für die Komponente c2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethaaylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, (3-Acryloyloxypropionsäure, Trichloracrylsäure, Fumarsäure, Crotonsäure, Aconitsäure, Dimethylacrylsäure, wobei diese Aufzählung nicht abschließend zu verstehen ist.

In einer weiteren bevorzugten Auslegung werden für die Komponente c2) aromatische Vinylverbindungen eingesetzt, wobei bevorzugt die aromatischen Kerne aus C₄ bis C₁₈ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend zu verstehen ist.

Zur Polymerisation werden die Monomere wiederum dermaßen gewählt, dass die resultierenden Polymere als industriell verwendbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Zur Herstellung der Polyacrylathaftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, Seite 60 bis 147 beschrieben. Diese Methoden werden in bevorzugter Weise in Analogie angewendet. Beispiele für Radikalquellen sind Peroxide, Hydroperoxide und Azoverbindungen, als Beispiele für typische Radikalinitiatoren seien genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol.

Die mittleren Molekulargewichte Mₙ der bei der radikalischen Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten Mₙ von 100.000 bis 500.000 g/mol hergestellt. Die Bestimmung des mittleren Molekulargewichtes erfolgt über Größenausschlusschromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether) und Ether (zum Beispiel Diethylether, Dibutylether) oder Gemische davon.
Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen sowie Derivaten und Gemischen davon.

Zur Radikalstabilisierung werden in günstiger Vorgehensweise Nitroxide des Typs (NIT 1) oder (NIT 2) eingesetzt: 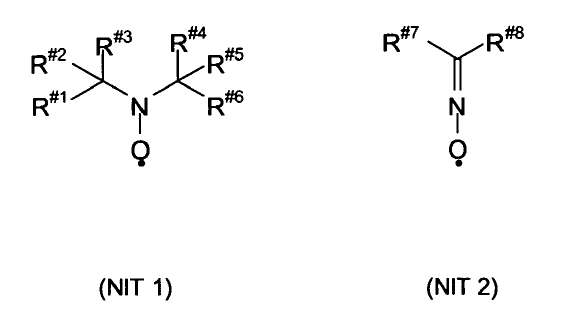 wobei R^{#1}, R^{#2}, R^{#3}, R^{#4}, R^{#5}, R^{#6}, R^{#7}, R^{#8} unabhängig voneinander folgende Verbindungen oder Atome bedeuten:
i) Halogenide, wie zum Beispiel Chlor, Brom oder lod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR^{#9}, Alkoxide -OR^{#10} und/oder Phosphonate -PO(OR^{#11})₂,
wobei R^{#9}, R^{#10} und/oder R^{#11} für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Eine Reihe weiterer Polymerisationsmethoden, nach denen die Polyacrylathaftklebemasse in alternativer Vorgehensweise hergestellt werden können, sind aus dem Stand der Technik bekannt und werden im Folgenden kurz beschrieben.

Die US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft.

WO 98/13392 A1 beschreibt offenkettige Alkoxyaminverbindungen, die ein symmetrisches Substitutionsmuster aufweisen.

Die EP 0 735 052 A1 offenbart ein Verfahren zur Herstellung thermoplastischer Elastomere mit engen Molmassenverteilungen.

WO 96/24620 A1 beschreibt ein Polymerisationsverfahren, bei dem sehr spezielle Radikalverbindungen wie zum Beispiel phosphorhaltige Nitroxide, die auf Imidazolidin basieren, eingesetzt werden.

WO 98/44008 A1 offenbart spezielle Nitroxyle, die auf Morpholinen, Piperazinonen und Piperazindionen basieren.

DE 199 49 352 A1 beschreibt heterozyklische Alkoxyamine als Regulatoren in kontrolliert radikalischen Polymerisationen. Entsprechende Weiterentwicklungen der Alkoxyamine beziehungsweise der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (gemäß der EP 0 824 111 A1, der EP 0 826 698 A1, der EP 824 110 A1, der EP 841 346 A1 oder der EP 850 957 A1) eingesetzt werden. Die unterschiedlichen Möglichkeiten der ATRP sind ferner in der US 5,945,491 A, der US 5,854,364 A und der US 5,789,487 A beschrieben.

Weiterhin vorteilhaft kann das erfindungsgemäß genutzte Polymer über eine anionische Polymerisation hergestellt werden. Hier werden als Reaktionsmedium bevorzugt inerte Lösungsmittel verwendet wie zum Beispiel aliphatische und cycloaliphatische Kohlenwasserstoffe oder auch aromatische Kohlenwasserstoffe.

Weiterhin lassen sich auch difunktionelle Initiatoren einsetzen wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere wie zum Beispiel n-Butylacrylat und 2-Ethylhexylacrylat direkt polymerisiert werden können und nicht im Polymer durch eine Umesterung mit dem entsprechenden Alkohol generiert werden müssen.

Als sehr bevorzugter Herstellprozess wird eine Variante der RAFT-Polymerisation (reversible addition-fragmentation chain transfer polymerization) durchgeführt. Der Polymerisationsprozess ist zum Beispiel in der WO 98/01478 A1 und der WO 99/31144 A1 ausführlich gezeigt. Zur Herstellung eignen sich besonders vorteilhaft Trithiocarbonate der allgemeinen Struktur R"'-S-C(S)-S-R"' (Macromolecules 2000, 33, 243 bis 245).

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo-oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet.
Beispiele für Radikalquellen sind Peroxide, Hydroperoxide und Azoverbindungen. Als einige nicht ausschließliche Beispiele für typische Radikalinitiatoren seinen hier genannt Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88^{®}, DuPont^{®}) oder 2,2-Azo-bis-(2-methylbutannitril) (Vazo 67^{®}, DuPont^{®}) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden.

Bevorzugt wird die innere Festigkeit (Kohäsion) der Polyacrylhaftklebemasse des Haftklebebandes durch eine Vernetzung gesteigert. Durch die Vernetzung der Haftklebemasse erhöhen sich der Gelwert und der Mikroscherweg des Haftklebebandes. Allerdings verringert sich durch die Vernetzung auch die Klebkraft. Für die Vernetzung können den acrylathaltigen Haftklebemassen optional verträgliche Vernetzersubstanzen zugesetzt werden. Als Vernetzer eignen sich besonders Metallchelate, multifunktionelle Isocyanate, multifunktionelle Amine oder multifunktionelle Alkohole. Die Vernetzung kann in günstiger Weise thermisch oder durch energiereiche Strahlung (actinische Strahlung) erfolgen, im letzteren Fall insbesondere durch Elektronenstrahlung (ES) oder nach Zugabe geeigneter Photoinitiatoren durch ultraviolette Strahlung. Bevorzugte unter Strahlung vernetzende Substanzen sind zum Beispiel bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen. Als Photoinitiatoren eignen sich bevorzugt Norrish-Typ I - und -Typ II -Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate,
wobei diese Aufzählung keinen Anspruch auf Vollständigkeit besitzt, sondern ohne erfinderisches Zutun vom Fachmann erweitert werden kann.

Zur vorteilhaften Weiterentwicklung sind der Polyacrylathaftklebemasse des Haftklebebandes keinerlei Additive wie klebrigmachende Harze oder Weichmacher (Plastifizierungsmittel) zugesetzt. Derartige Additive erhöhen zwar die Klebkraft, können aber erheblich die Scherfestigkeit der Haftklebemasse verringern und somit zu Klebmasseresten an den Schneidwerkzeugen beim Schneidprozess der Biosensoren führen.

Additive wie Füllstoffe (zum Beispiel Fasern, Ruß, Zinkoxid, Titandioxid, Kreide, Voll-oder Hohlglaskugeln, Mikrokugeln aus anderen Materialien, Kieselsäure, Silikate, Nanopartikel), Compoundierungsmittel und/oder Alterungsschutzmittel, zum Beispiel in Form von primären und sekundären Antioxidantien oder in Form von Lichtschutzmitteln können der Haftklebemasse zugesetzt werden.

Zusammenfassend weist die bevorzugte Ausführungsform des Haftklebebands eine Polyacrylathaftklebemasse auf, wobei das Haftklebeband durch Coextrusion, Schmelz-, Lösemittel- oder Dispersionsbeschichtung gefertigt wird. Besonders bevorzugt ist eine Kommarakelbeschichtung der Polyacrylathaftklebemasse aus einem geeigneten Lösemittel oder Lösemittelgemisch.

Vorteilhaft ist die Verwendung einer Primerschicht zwischen Trägerfolie und (Polyacrylat)haftklebemasse zur Verbesserung der Haftung der Klebmasse auf der Trägerfolie und somit zur Vermeidung von Klebmasseresten auf dem Schneidwerkzeug beim Schneidprozess der Diagnoseteststreifen. Als Primer sind die bekannten Dispersion- und Lösungsmittelsysteme verwendbar zum Beispiel auf Basis von Isopren-oder Butadien enthaltenden Kautschuk, Cyclokautschuk, Polyvinylchlorid- und/oder Polyvinyldichlorid. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern.

Beschreibungen der üblichen Klebmassen sowie Rückseitenbeschichtungen und Primern finden sich zum Beispiel in "Handbook of Pressure Sensitive Adhesive Technology", D. Satas, (3. Auflage).

Das erfindungsgemäße Haftklebeband kann optional eine Trägerfolie enthalten, die beidseitig mit der Haftklebemasse beschichtet ist. Als Trägermaterialien werden die dem Fachmann geläufigen und üblichen Trägermaterialien wie Folien aus Polyester, Polyethylen, Polypropylen, Verstreckten Polypropylen, Polyvinylchlorid, besonders bevorzugt Folien aus Polyethylenterephthalat (PET) verwendet. Diese Aufzählung ist nicht abschließend zu verstehen, sondern im Rahmen der Erfindung sind weitere Folien enthalten.

Für die Verarbeitung und Verwendung im Biosensor kann es von Vorteil sein, wenn aus dem Haftklebeband Stanzlinge mit einer für die Anwendung geeigneten Stanzform hergestellt werden. Die Stanzform weist vorteilhafterweise zumindest eine sich bis in den Randbereich erstreckende Ausstanzung auf, die in dem Haftklebebandabschnitt den Messraum des Biosensors bildet.
Zur Herstellung der Haftklebeband-Stanzlinge werden die üblichen Verfahren wie Flachbett-, Rotationsstanzen, Wasserstrahlschneiden oder Laserschneiden verwendet. Bei der Herstellung der Stanzlinge ist eine sehr hohe Präzision im µm-Bereich erforderlich. Der Stanzling aus dem Haftklebeband kann unmittelbar nach dem Stanzprozess mit der geprägten Folie laminiert werden, so dass die Kombination aus dem Stanzling des Haftklebeband und der geprägten Folie direkt dem Herstellprozess der Biosensoren zugeführt werden kann. Es ist aber ebenso möglich, dass das Haftklebeband und die geprägte Folie separat in den Herstellprozess zugeführt und erst hier miteinander laminiert werden. Die Stanzling werden vorzugsweise als Endlosrollen hergestellt, ohne diese zu separieren. Hierbei wird lediglich der zukünftige Messraum herausgestanzt. Das Separieren der einzelnen Stanzlinge erfolgt üblicherweise erst durch den Schneidvorgang des vollständig montierten Biosensors.

Bei der strukturierten Folie handelt es sich nach einer vorteilhaften Ausführungsform um eine handelsübliche Polymerfolie aus zum Beispiel Polyester, Polyethylen, Polypropylen, verstrecktem Polypropylen, Polyvinylchlorid, Polyacrylat, Polycarbonat und/oder aus entsprechenden Laminaten oder Coextrudaten, die in einem nachfolgenden Arbeitsschritt mit üblichen Verfahren geprägt wird.
Die Dicke der strukturierten Folie, die weiter bevorzugt planar strukturiert ist, beträgt insbesondere 25 µm bis 150 µm.

Zur Prägung wird die Struktur entweder durch einen heißen Prägestempel in die Folie eingeschmolzen oder durch ein positives und eine negatives beheiztes Prägewerkzeug (Konterprägung) erzeugt. Das Prägen kann diskontinuierlich durch Prägestempel oder kontinuierlich durch Prägewalzen erfolgen. Die Strukturierung kann zum Beispiel ebenfalls durch Mikrospritzguss- oder Tiefziehverfahren, durch photolithographische Verfahren oder durch das Abtragen einer Polymerschicht oder -schichten durch einen Laser (Laserstrukturierung) erfolgen. Da es sich um eine Mikrostrukturierung mit einer Strukturtiefe von 20 bis 150 µm und vorzugsweise von 20 bis 80 µm handelt, ist eine sehr hohe Präzision im µm-Bereich erforderlich. Die Strukturierung der Folie dient der Erzeugung eines Kanals zur Belüftung des Messraumes. Nur durch diese Belüftung ist das schnelle Füllen des Messraumes mit der biologischen Flüssigkeit zum Beispiel Blut möglich.
Durch die Verwendung der strukturierten Folie kann ein schneller Transport der biologischen Flüssigkeit zum und im Messraum des Biosensors erfolgen. Auf die Maßnahmen entsprechend dem Stand der Technik für den Gasaustritt aus dem Messraum wie zum Beispiel die Verwendung von sehr komplizierten Stanzformen oder das Stanzen beziehungsweise Einbrennen eines Lochs in die Deckfolie des Biosensors kann hierdurch verzichtet werden. Daraus ergibt sich ein erheblicher Verarbeitungsvorteil in der Herstellung der Biosensoren. Die Strukturierung kann zusätzlich eine Prägung des Messraumes beinhalten. An die Form und Gestalt des Messraumes sind keinerlei Einschränkungen gesetzt. Eine Strukturtiefe von 20 bis 150 µm und vorzugsweise von 20 bis 80 µm ist erforderlich, um die Funktionstüchtigkeit des Biosensors mit einem möglichst kleinen Volumen an biologischer Flüssigkeit zu gewährleisten. Bei größeren Strukturtiefen wird deutlich mehr an biologischer Flüssigkeit benötigt, um den Messraum zu füllen. Damit verbunden ist auch eine Verlängerung der Messzeit. Im Falle einer geringeren Strukturtiefen ist der Transport der biologischen Flüssigkeiten, die höhere Viskositäten als Wasser aufweisen, deutlich verlangsamt, was ebenfalls zu einer Verlängerung der Messzeit führt. Des Weiteren werden aufgrund des hier sehr geringen Flüssigkeitsvolumens vermehrt Fehlmessungen der Biosensoren beobachtet.

Die strukturierte Folie ist vorteilhafterweise ein- oder beidseitig mit einer hydrophilen Oberfläche ausgerüstet, um eine zusätzliche Verbesserung und Beschleunigung des Transportes der biologischen Flüssigkeit zu erreichen. Um eine hydrophile Oberfläche zu erhalten, kann zum einen die Folie selbst oder die äußere Coextrusionsschicht der Folie aus einem polaren Polymer wie zum Beispiel Polyacrylat, PMMA, Ethylen-Vinylacetat-Copolymer oder PVC bestehen oder die Oberfläche mit einer geeigneten Beschichtung versehen sein. Diese Beschichtung kann zum Beispiel aus polaren Polymeren wie Polyvinylpyrrolidon, Polyethylenglycol, PVC, Polyvinylidenchlorid, Natriumcarboxycellulose oder aus einem oberflächenaktiven Tensid wie Alkyl- oder Alkylbenzensulfonaten, Sulfosuccinaten oder Alkylsulfaten bestehen. Weitere Beispiele für oberflächenaktive Substanzen finden sich in "Ullmann's Enzcyclopedia of Industrial Chemistry" Vol. 25, 1994, VCH. Die Hydrophilierung der Oberfläche kann auch durch Verfahren wir Ätzung mittels starker Säuren wie Trichloressigsäure oder durch Plasmabehandlung erreicht werden.

Für den erfindungsgemäßen Biosensor sind neben der biologischen Kompatibilität der Bestandteile zur biologischen Testflüssigkeit und zur Enzymreaktion auch die Dickentoleranz und eine geringe Kompressibilität wichtig. Da durch die Dicke des Haftklebebandes bei den meisten Biosensoren der Abstand zwischen den Funktionsschichten wie Basisfolie, Gewebe und Deckfilm und damit das Volumen der biologischen Testflüssigkeit im Teststreifen bestimmt wird, ist nur durch eine geringe Kompressibilität sowie durch eine sehr gute Dickentoleranz eine korrekte Messung zum Beispiel des Blutzuckergehaltes möglich.

Der schnelle Transport von biologischen Flüssigkeiten wie zum Beispiel Blut in der erfindungsgemäßen Kombination zeigt sich in einer Geschwindigkeit der biologischen Flüssigkeit von mindestens 0,5 m/s, vorzugsweise mindestens 1,0 m/s und besonders bevorzugt von 1,5 m/s.

Die charakteristische Eigenschaft des erfindungsgemäßen Biosensors resultiert aus der Kombination aus dem Haftklebeband und aus der strukturierten Folie mit einer Strukturtiefe von 20 bis 150 µm, wobei die eingesetzte Haftklebemasse eine hohe Kohäsion beziehungsweise Scherfestigkeit bei gleichzeitig guter Klebkraft mit dünner Klebmasseschicht von höchstens 40 g/m² aufweist. Durch diese Kombination von Eigenschaften kann die Aufgabe der Erfindung, die erhebliche Verringerung der Klebemassereste am Schneidwerkzeug im Schneidprozess bei einer gleichzeitigen Verringerung der Komplexität des Herstellprozesses der Biosensoren und der Gewährleistung kurzer Messzeiten, gelöst werden. Die Verringerung der Komplexität des Herstellprozesses sowie kurze Messzeiten werden durch eine geeignete Strukturierung der Deckfolie erreicht.

Der erfindungsgemäße Biosensor zur Untersuchung von biologischen Flüssigkeiten arbeitet nach einem kolorimetrisch oder vorzugsweise nach einem elektrochemisch Messverfahren. Bevorzugt ist hierbei der Nachweis von Glucose im menschlichen Blut.

Für die Nachweisreaktion wird die Basisschicht entsprechende funktionalisiert und bildet die Funktionsschicht des erfindungsgemäßen Biosensors. Die Basisfolie kann zum Beispiel aus PVC, Papier, Polycarbonat oder Polyester in einem Dickenbereich von vorzugsweise 300 bis 500 µm bestehen. Für einen elektrochemischen Biosensor zur Glucosebestimmung werden hierfür zunächst Leiterbahnen für die Arbeits-, Gegen- und eventuell für die Referenzelektrode auf das Basismaterial gedruckt. Hierzu werden leitfähigen Tinten, die zum Beispiel aus Kohlenstoff-, Graphit- oder Silberleitpasten bestehen, verwendet. Je nach Aufbau können sich zwischen den verschiedenen Leiterbahnschichten isolierende Schichten befinden, die ebenfalls aufgedruckt werden. Alternativ kann die Basisfolie auch mit einer leitfähigen Schicht aus zum Beispiel Kupfer, Silber, Gold oder Aluminium laminiert, bedampft oder gesputtert sein. Die Leiterbahnen werden hier in einem nachfolgenden Prozess durch Ätzung erhalten. Auf die Arbeits- und Gegenelektrode wird das für die Nachweisreaktion erforderliche Enzym oder Enzymgemisch aus zum Beispiel Glucose-Oxidase/Peroxidase und ein Redox-Mediator zum Beispiel Ferrocen oder Derivate aufgebracht.

Für den Fachmann überraschend und nicht vorhersehbar kann ein Laminat des Haftklebebands mit der strukturierten Folie mit den erfindungsgemäßen Eigenschaften einerseits die widersprüchlichen Anforderungen einer guten Klebkraft zu dem Basismaterial der Diagnoseteststreifen bei gleichzeitig geringer Klebrigkeit zu den Schneidwerkzeugen und andererseits einen schnellen Bluttransport lösen.

Anhand der nachfolgend beschriebenen Figuren werden beispielhafte Ausführungsformen des Biosensors dargestellt, ohne damit die Erfindung unnötig einschränken zu wollen. Es zeigen
- Figur 1: einen beispielhaften Aufbau eines medizinischen Biosensors,
- Figuren 2a und 2b: eine vorteilhafte Ausführungsform des Biosensors aus Figur 1 und
- Figuren 3a und 3b: eine weitere vorteilhafte Ausführungsform des Biosensors aus Figur 1.

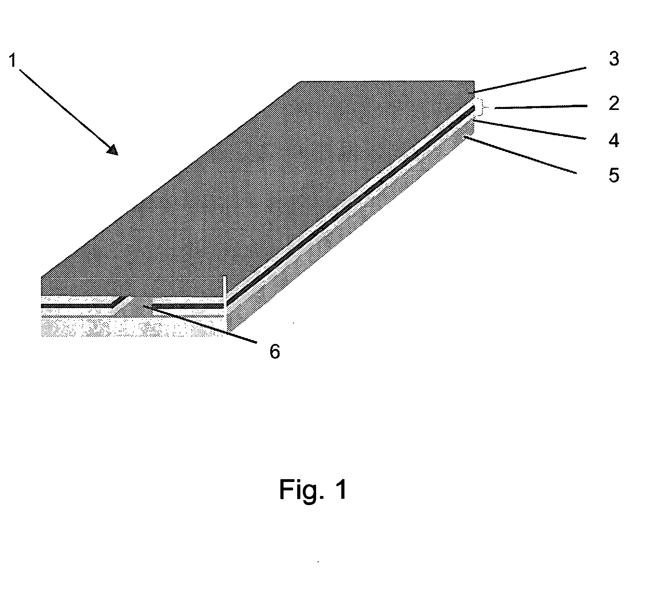

In der Figur 1 ist ein beispielhafter Aufbau eines medizinischen Biosensors beziehungsweise Diagnoseteststreifens schematisch dargestellt.

Der Teststreifen 1 setzt sich aus mehreren einzelnen Schichten 2, 3, 4 und 5 zusammen. Auf dem Abschnitt des Basismaterials 5 aus 500 µm PET befinden sich mehrere funktional bedruckte Schichten aus zum Beispiel leitfähigen oder isolierenden Materialien oder Enzymen. Die Basisfolie und die funktionale Bedruckung bilden die Funktionsschicht 5 des Biosensors. Diese Funktionsschichten 5 sind mit einem Abschnitt der strukturierten Folie 3 mit einer vorzugsweise hydrophil modifizierten Oberfläche durch einen Stanzling des doppelseitigen Haftklebebands 2 verbunden.
Das Haftklebeband 2 selbst weist zwei Haftklebeschichten aus vorzugsweise einer Polyacrylat-Haftklebemasse auf, zwischen denen ein Träger aus PET vorhanden ist. Der Stanzling des Haftklebebands 2 bildet einen Messraum 6, der aus einem sich in den Randbereich erstreckenden Ausschnitt gebildet wird und der zum Transport der zu vermessenden biologischen Testflüssigkeit, zum Beispiel Blut, zur Messzelle notwendig ist.

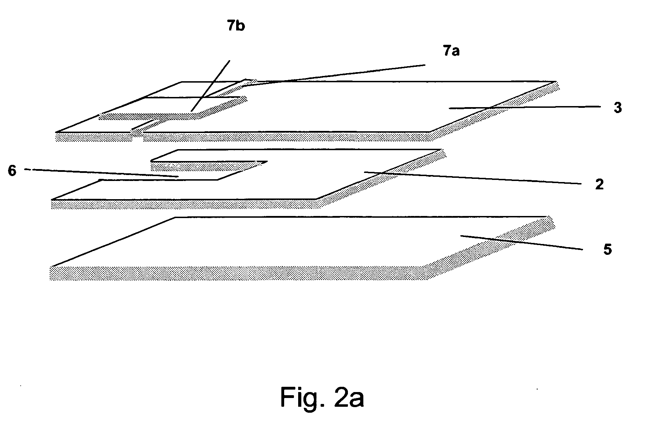

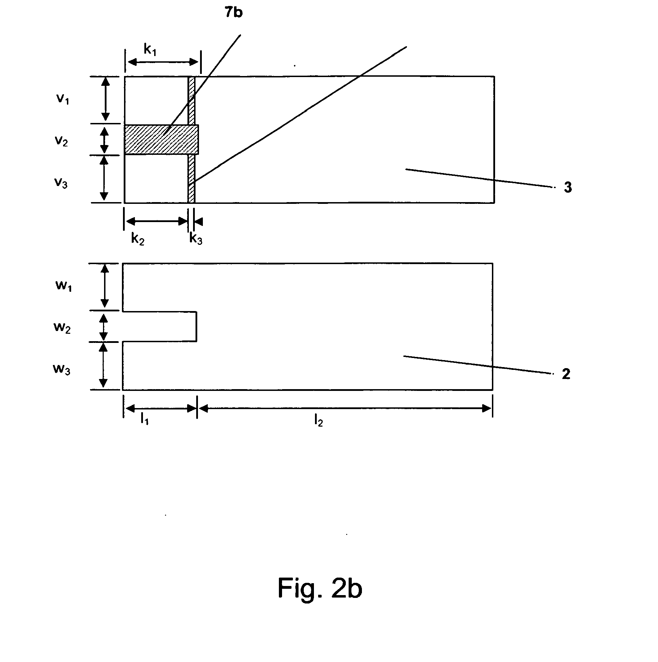

Die Figuren 2a und 2b zeigen eine vorteilhafte Ausführungsform des Biosensors aus Figur 1.
Der Teststreifen 1 besteht gemäß Figur 2a aus drei rechteckigen Schichten, und zwar aus der Funktionsschicht 5, auf der das beidseitig mit Klebemasse ausgerüstete Haftklebeband 2 aufgebracht ist, auf dem die strukturierte Folie 3 aufgebracht ist, wobei in der Haftklebebandschicht 2 ein sich bis in den Randbereich erstreckender Messraum 6 vorgesehen ist. Dieser Messraum 6 wird durch Ausstanzen eines Rechtecks aus der Schicht des Haftklebebands 2 hergestellt.

Die Strukturierung in der strukturierten Folie 3 besteht aus einem endlosen Kanal 7a mit einer Breite von 40 µm und einer Tiefe von 40 µm. Dieser dient zur Entlüftung des Messraumes 6 des Biosensors. Der Kanal 7a schneidet den Messraum 6 in einem rechten Winkel.
Des Weiteren ist oberhalb des Messraumes 6 eine Vertiefung 7b in der strukturierten Folie vorgesehen, die Abmaße aufweist von 1 mm Breite, 5 mm Länge und 40 µm Tiefe. Diese Vertiefung 7b.

Die Figur 2b zeigt eine Draufsicht auf den Haftklebeband-Stanzling 2 und den Abschnitt der strukturierten Folie 3, wobei die Strukturierungen 7a, 7b der strukturierten Folie (Vertiefungen) markiert sind.
Des Weiteren ist die Funktionsschicht 5 gezeigt.

Die Schicht der strukturierten Folie 3 weist die folgenden Abmaße auf:

| | Länge |
|---|---|
| | [mm] |
| v₁ | 2 |
| v₂ | 1 |
| v₃ | 2 |
| k₁ | 5 |
| k₂ | 4,8 |
| k₃ | 0,04 |

Die Schicht des Haftklebebands 2 weist die folgenden Abmaße auf:

| | Länge |
|---|---|
| | [mm] |
| w₁ | 2 |
| w₂ | 1 |
| w₃ | 2 |
| l₁ | 5 |
| l₂ | 15 |

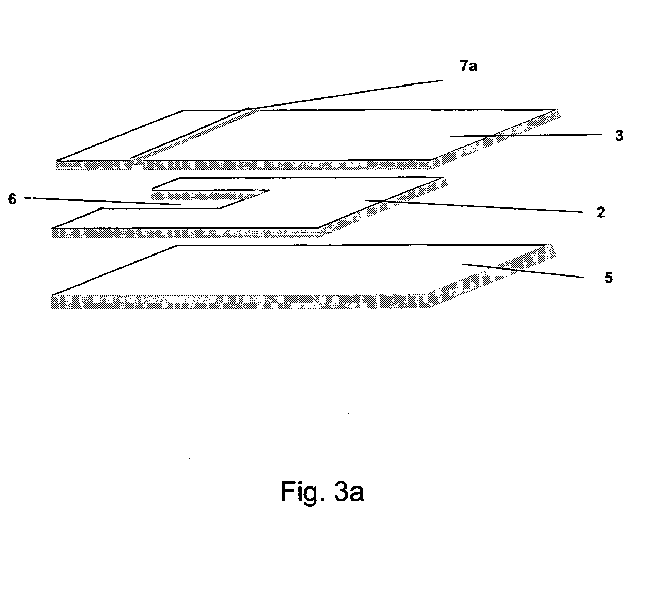

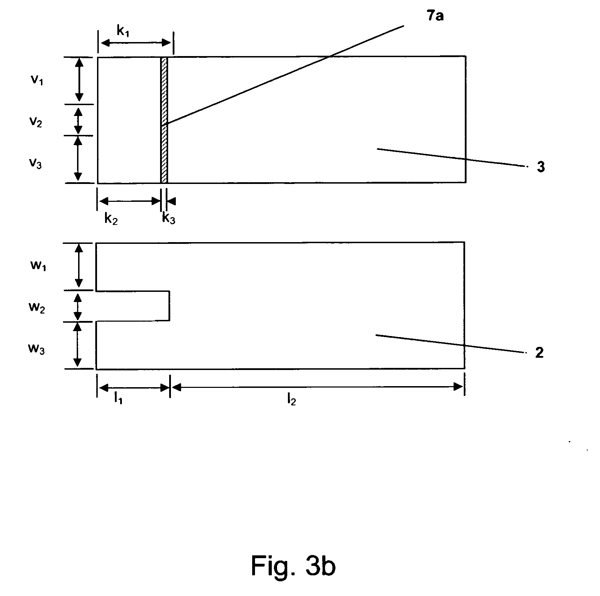

Die Figuren 3a und 3b zeigen eine weitere vorteilhafte Ausführungsform des Biosensors aus Figur 1.
Der Teststreifen 1 besteht gemäß Figur 3a aus drei rechteckigen Schichten, und zwar aus der Funktionsschicht 5, auf der das beidseitig mit Klebemasse ausgerüstete Haftklebeband 2 aufgebracht ist, auf dem die strukturierte Folie 3 aufgebracht ist, wobei in der Haftklebebandschicht 2 ein sich bis in den Randbereich erstreckender Messraum 6 vorgesehen ist. Dieser Messraum 6 wird durch Ausstanzenden eines Rechtecks aus der Schicht des Haftklebebands 2 hergestellt.

Die Strukturierung in der strukturierten Folie 3 besteht aus einem endlosen Kanal 7a mit einer Breite von 40 µm und einer Tiefe von 40 µm. Dieser dient zur Entlüftung des Messraumes 6 des Biosensors. Der Kanal 7a schneidet den Messraum 6 in einem rechten Winkel.

Die Figur 2b zeigt eine Draufsicht auf den Haftklebeband-Stanzling 2 und den Abschnitt der strukturierten Folie 3, wobei die Strukturierungen 7a, 7b der strukturierten Folie (Vertiefungen) markiert sind.
Des Weiteren ist die Funktionsschicht 5 gezeigt.

Die Schicht der strukturierten Folie 3 weist die folgenden Abmaße auf:

| | Länge |
|---|---|
| | [mm] |
| v₁ | 2 |
| v₂ | 1 |
| v₃ | 2 |
| k₁ | 5 |
| k₂ | 4,8 |
| k₃ | 0,04 |

Die Schicht des Haftklebebands 2 weist die folgenden Abmaße auf:

| | Länge |
|---|---|
| | [mm] |
| w₁ | 2 |
| w₂ | 1 |
| w₃ | 2 |
| l₁ | 5 |
| l₂ | 15 |

### Prüfmethoden

### K-Wert

Der K-Wert ist ein Maß für die mittlere Molekülgröße hochpolymerer Stoffe. Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

### Glasübergang

Der dynamische Glasübergang der Haftklebemasse wird mittels rheometrischer Untersuchung bestimmt. Es wird ein Rheometer der Reihe Ares der Firma TA verwendet. Die Glasübergangstemperatur ist das Maximum der tan δ (=G"/G') Kurve und wird bei 10 rad/s ermittelt.

### Gelwert

Die lösungsmittelfreien Haftklebemassenproben werden in ein Vliestütchen aus Polyethylen (Tyvek-Vlies) eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, das nicht mit Toluol extrahierbar ist, bestimmt.

### Klebkraft

Die Prüfung der Schälfestigkeit (Klebkraft) erfolgte in Anlehnung an PSTC-1. Ein 2 cm breiter Streifen des Haftklebebandes wird auf dem Prüfuntergrund wie zum Beispiel einer geschliffenen Stahlplatte oder einer PET-Platte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen und die dafür notwendige Kraft ermittelt. Die Messergebnisse sind in N/cm angegeben und über drei Messungen gemittelt. Alle Messungen wurden bei Raumtemperatur durchgeführt.

### Scherstandzeiten

Die Prüfung erfolgte in Anlehnung an PSTC-7. Ein 1,3 cm breiter Streifen des Haftklebebandes wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so dass eine Scherbeanspruchung parallel zur Verklebungsfläche entsteht, und die Zeit gemessen, bis die Verklebung versagt. Ist eine Haltezeit von 10 000 min erreicht, so wird der Versuch vor Versagen der Klebbindung abgebrochen.

### Mikroscherweg µS1

Ein 1 cm breiter Streifen des Haftklebebandes wird auf einem polierten Stahlplättchen (Prüfuntergrund) auf einer Länge von 5 cm mit einer 2 kg-Rolle durch dreimaliges doppeltes Überrollen verklebt. Doppelseitige Klebebänder werden auf der Rückseite mit einer 50 µm Aluminiumfolie abgedeckt. Der Teststreifen wird mit einer 190 µm dicken PET-Folie verstärkt und anschließend kantengerade mit Hilfe einer Fixiervorrichtung abgeschnitten. Dabei steht die Kante des verstärkten Teststreifens 1 mm über der Kante des Stahlplättchens. Die Plättchen werden für 15 min unter Testbedingungen (40 °C, 50% rel. Luftfeuchte) im Messgerät, aber ohne Last, equilibriert. Dann wird das Testgewicht 500 g angehängt, so dass eine Scherbeanspruchung parallel zur Verklebungsfläche entsteht. Mittels eines Mikrowegaufnehmers wird in Abhängigkeit der Zeit der Scherweg graphisch aufgenommen.
Als Mikroscherweg µS1 wird die Scherstrecke nach einer Gewichtsbelastung von 15 min angegeben. Nach der Messzeit von 15 min unter Gewichtsbelastung wird das Gewicht vorsichtig von der Probe entfernt und anschließend das Relaxieren für weitere 15 min beobachtet. Nach 15 min ohne Gewichtsbelastung (Relaxtion) wird der Mikroscherweg µS2 ermittelt. Aus den beiden Messwerten wird der Mikroscherwegsquotient µS2/pS1 ermittelt. Dieser Quotient ist ein Maß für die Elastizität der Haftklebemasse.

### Kapillartest

Die Messung der Transportgeschwindigkeit von biologischen Flüssigkeiten erfolgt in einem Kapillartest. Hierzu wird auf eine unbeschichtete und unbehandelte Oberfläche einer 350 µm dicken PET-Folie das zu prüfende Laminat aus dem Haftklebeband und der strukturierten Folie laminiert, so dass eine Kapillare entsteht. Dazu werden zwei Streifen des Haftklebebandes parallel auf die Basisfolie laminiert, dass sich zwischen diesen beiden Streifen ein Kanal mit exakt einer Breite von 1 mm bildet. Dieser Kanal wird anschließend mit der strukturierten Folie bedeckt. Die Kapillare wird nun in tierisches Blut gehalten. Es wird die Zeit ermittelt, die notwendig ist, damit die Flüssigkeitsfront 10 mm zurücklegt. Alternativ wird das zu prüfende Laminat aus einer Stanzling des Haftklebebandes und der strukturierten Folie auf eine 350 µm dicke PET-Folie laminiert. Die Geschwindigkeit des Transportes des tierischen Bluts innerhalb des Prüfkörpers wird hier durch Videoaufnahmen ermittelt. Als Ergebnis des Kapillartests wird die Geschwindigkeit der Blutfront in mm/s angegeben.

Im Folgenden soll die Erfindung anhand mehrerer Beispiele näher erläutert werden, ohne damit die Erfindung unnötig einschränken zu wollen.

### Beispiele

### Beispiel 1

Ein für eine radikalische Polymerisation konventioneller Reaktor wurde mit 8 kg Acrylsäure, 45 kg n-Butylacrylat, 3 kg t-Butylacrylat und 60 kg Aceton befüllt. Nach 45 Minuten Durchleiten von Stickstoffgas unter Rühren wurde der Reaktor auf 58 °C hochgeheizt und 20 g Azoisobutyronitril (AIBN, Vazo 6^{®}, Firma DuPont) hinzugegeben. Anschließend wurde das äußere Heizbad auf 75 °C erwärmt, und die Reaktion konstant bei dieser Außentemperatur durchgeführt. Nach 1 h Reaktionszeit wurde wiederum 20 g AIBN hinzugegeben. Nach 3 h und 6 h wurde mit jeweils 10 kg Aceton/lsopropanol (97:3) das Gemisch verdünnt. Zur Reduktion der Restinitiatoren wurden nach 8 h und nach 10 h jeweils 100 g Bis-(4-tert.-Butylcyclohexanyl)-Peroxy-dicarbonat (Perkadox 16^{®}, Firma Akzo Nobel) hinzugegeben. Die Reaktion wurde nach 22 h Reaktionszeit abgebrochen und auf Raumtemperatur abgekühlt.
Nach der Polymerisation wurde das Polymer mit Isopropanol auf einen Feststoffgehalt von 25 % verdünnt und dann mit 0,3 Gew.-% Polyisocyanat (Desmodur N 75, Firma Bayer) unter Rühren abgemischt. Anschließend wurde die Polymerlösung mit Hilfe eine Komma-Rakels auf beiden Seiten eines 50 µm dicken Polyesterträgers, der zuvor je Seite mit 1 g/m² Polyvinyldichchorid-Acrylnitril-Copolymer (Saran, Firma Dow Chemicals) wurde, beschichtet. Die Trocknung erfolgte für 10 Minuten bei 120 °C. Der Masseauftrag je Beschichtungsseite betrug 12 g/m². Nach dem ersten Beschichtungsschritt wurde die Klebmasse mit einem Trennpapier abgedeckt.
Aus dem Haftklebeband werden mittels einer Rotationsstanze Stanzlinge mit einem ausgestanzten Rechteck mit den Abmessungen 1 mm x 5 mm hergestellt. In eine Hart-PVC-Folie wird durch Heißprägung ein Endloskanal (Entlüftungskanal) hergestellt, der parallel zur Laufrichtung 40 µm breit und 40 µm tief ist. Der Stanzling wird anschließend mit der Hart-PVC-Folie so laminiert, dass der Endloskanal das ausgestanzte freie Rechteck schneidet (siehe Figur 3a).
Dieses Laminat aus dem Haftklebeband-Stanzling und der strukturierten Folie wird mit der Funktionsschicht zu dem Biosensor laminiert.
Die Funktionsschicht ist folgendermaßen aufgebaut. Auf eine 350 µm dicke PET-Folie werden die Leitungsbahnen mit einer leitfähigen Farbe auf Silberbasis aufgedruckt. Im Bereich des Messraumes wird anschließend die Reaktivschicht bestehend aus der Aktiv-Komponente Glucose-Dehydrogenase, dem Coenzym NAD+, dem Mediator 1,10-Phenantroline sowie einem Bindemittel aus Hydroxyethyl-Cellulose auf die Arbeitselektrode aufgetragen.

### Beispiel 2

Ein für eine radikalische Polymerisation konventioneller Reaktor wurde mit 28 kg Acrylsäure, 292 kg 2-Ethylhexylacrylat, 40 kg Methylacrylat und 300 kg Aceton/Isopropanol (97:3) befüllt. Nach 45 Minuten Durchleiten von Stickstoffgas unter Rühren wurde der Reaktor auf 58 °C hochgeheizt und 0,2 kg Azoisobutyronitril (AIBN, Vazo 64^{®}, Firma DuPont) hinzugegeben. Anschließend wurde das äußere Heizbad auf 75 °C erwärmt, und die Reaktion konstant bei dieser Außentemperatur durchgeführt. Nach 1 h Reaktionszeit wurde wiederum 0,2 kg AIBN hinzugegeben. Nach 3 h und 6 h wurde mit jeweils 150 kg Aceton/Isopropanol (97:3) das Gemisch verdünnt. Zur Reduktion der Restinitiatoren wurden nach 8 h und nach 10 h jeweils 0,4 kg Bis-(4-tert.-Butylcyclohexanyl)-Peroxy-dicarbonat (Perkadox 16^{®}, Firma Akzo Nobel) hinzugegeben. Die Reaktion wurde nach 22 h Reaktionszeit abgebrochen und auf Raumtemperatur abgekühlt.
Nach der Polymerisation wurde das Polymer mit Isopropanol auf einen Feststoffgehalt von 25 % verdünnt und dann mit 0,4 Gew.-% Aluminium(III)-acetylacetonat unter Rühren abgemischt. Anschließend wurde die Polymerlösung mit Hilfe eine Komma-Rakels auf beide Seiten eines 12 µm dicken Polyesterträgers, der zuvor mittels Corona vorbehandelt wurde, beschichtet. Die Trocknung erfolgte für 10 Minuten bei 120 °C. Der Masseauftrag je Beschichtungsseite betrug 12 g/m². Nach dem ersten Beschichtungsschritt wurde die Klebmasse mit einem Trennpapier abgedeckt.
Aus dem Haftklebeband werden entsprechend Beispiel 1 Stanzlinge hergestellt. Der Stanzling wird anschließend mit einer strukturieren PET-Folie laminiert, so dass das ausgestanzte freie Rechteck des Stanzlings exakt mit der Strukturierung der Folie übereinstimmt. Die Form der Strukturierung ist in Figur 2a ersichtlich, wobei der Entlüftungskanal analog Beispiel 1 die Abmaße 40 µm breit und 40 µm tief hat und die Vertiefung für den Messraum die Abmaße 1 mm breit, 5 mm lang und 40 µm tief. Als Basismaterial für die strukturierte Folie wird die hydrophile PET-Folie 3M ® 9971 verwendet.
Dieses Laminat aus dem Haftklebeband-Stanzling und der strukturierten Folie wird mit der Funktionsschicht, wie im Beispiel 1 beschrieben, zu dem Biosensor laminiert.

### Beispiel 3

Eine Haftklebmasse analog Beispiel 2 wird mit einer Schichtdicke von 13 µm auf Trennpapier beschichtet. Aus dem Transfertape werden analog Beispiel 2 Stanzlinge hergestellt. Die strukturierte Folie besteht analog Beispiel 2 aus einer Prägung für den Entlüftungskanal und aus einer Prägung für den Messraum. Die Strukturtiefe für den Messraum ist hier allerdings 70 µm. Als Basismaterial für die strukturierte Folie wird eine 100 µm PET-Folie verwendet, die einseitig mit 0,2 g/m² mit Disponil ® AP 600 (Alkylpolyglykosid der Firma Cognis) hydrophiliert ist.
Dieses Laminat aus dem Haftklebeband-Stanzling und der strukturierten Folie wird mit der Funktionsschicht, wie im Beispiel 1 beschrieben, zu dem Biosensor laminiert.

| | **Beispiel 1** | **Beispiel 2** | **Beispiel 3** |
|---|---|---|---|
| Haftklebemasse | Rein-Acrylat | Rein-Acrylat | Rein-Acrylat |
| Klebmasseauftrag je Seite [g/m²] | 12 | 12 | 12 |
| Gesamtdicke Haftklebeband ohne Trennfolie [µm] | 73 | 36 | 13 |
| K-Wert 25 °C der Haftklebemasse | 74 | 62 | 62 |
| Glasübergangs-temperatur der Haftklebemasse [°C] | 0 | -5 | -5 |
| Mikroscherweg 500g, 40 °C [µm] | 23 | 49 | 53 |
| Quotient µS2/µS1 | 0,15 | 0,18 | 0,19 |
| Scherfestigkeit bei > 70 °C [min] | 10.000 | > 10.000 | > 10.000 |
| Klebkraft auf Stahl [N/cm] | 2,5 | 3,2 | 2,9 |
| KlebkraftaufPET [N/cm] | 1,1 | 1,9 | 1,7 |
| Kapillartest [mm/s] | 2 | 4 | 3 |
| Schneidversuche (8000Schnitte) | Minimale Klebmassereste nach 8000 Schnitten | Geringe Klebmassereste nach 8000 Schnitten | Geringe Klebmassereste nach 8000 Schnitten |

### Gegenbeispiele

### Gegenbeispiel 1

Als Gegenbeispiel 1 wird aus dem kommerzielle Produkt tesa ® 4980 ein Stanzling analog Beispiel 1 hergestellt und dieser mit einer strukturierten Folie analog Beispiel 1 laminiert. Bei diesem Klebeband handelt es sich um ein doppelseitiges Haftklebeband, das aus einem 12 µm PET-Trägermaterial besteht, dass von beiden Seiten mit 34 g/m² einer harzmodifizierten Acrylat-Haftklebemasse beschichtet ist. Das Laminat aus dem Haftklebeband-Stanzling und der strukturierten Folie wird mit der Funktionsschicht, wie im Beispiel 1 beschrieben, zu dem Biosensor laminiert.

Nach wenigen Tagen Lagerzeit der geschnittenen Biosensoren ist zu beobachten, dass die geprägten Entlüftungskanale teilweise bis vollständig hauptsächlich an den Schnittkanten mit Klebmasse zugesetzt sind.

### Gegenbeispiel 2

Das Haftklebeband und Stanzling wird wie in Beispiel 1 beschrieben hergestellt. Als Trägerfolie kommt ein 12 µm PET-Film zum Einsatz. Der Masseauftrag beträgt 50g/m² je Beschichtungsseite. Als strukturierte Folie wird die unter Beispiel 1 beschriebene verwendet. Das Laminat aus dem Haftklebeband-Stanzling und der strukturierten Folie wird mit der Funktionsschicht, wie im Beispiel 1 beschrieben, zu dem Biosensor laminiert.

Auch hier wird durch den hohen Masseauftrag ein teilweises Zusetzen der Belüftungskanäle beobachtet.

### Gegenbeispiel 3

Als Gegenbeispiel 3 wird das kommerzielle Produkt Scotch ® 415 von 3M verwendet. Bei diesem Klebeband handelt es sich um ein doppelseitiges Haftklebeband, das aus einem 50 µm PET-Trägermaterial besteht, dass von beiden Seiten mit 25 g/m² einer Rein-Acrylat-Haftklebemasse beschichtet ist.
Als Abdeckfolie (nicht strukturiert) wird die hydrophilierte Folie 9971 von 3M verwendet.
Das Laminat aus dem Haftklebeband-Stanzling und der strukturierten Folie wird mit der Funktionsschicht, wie im Beispiel 1 beschrieben, zu dem Biosensor laminiert.

| | **Gegenbeispiel 1** | **Gegenbeispiel 2** | **Gegenbeispiel 3** |
|---|---|---|---|
| Haftklebemasse | Acrylat Harzmodifiziert | Rein-Acrylat | Rein-Acrylat |
| Klebmasseauftrag je Seite [g/m²] | 34 | 50 | 25 |
| Gesamtdicke Haftklebeband ohne Trennfolie [µm] | 80 | 112 | 100 |
| K-Wert 25 °C der Haftklebemasse | 57 | 62 | nicht bekannt |
| Glasübergangs-temperatur der Haftklebemasse [°C] | 5 | 0 | -4 |
| Mikroscherweg µS1 500g, 40 °C [µm] | 470 | 45 | 550 |
| Quotient µS2/µS1 | 0,31 | 0,16 | 0,35 |
| Scherfestigkeit bei 70 °C [min] | 1278 | > 10.000 | 1269 |
| Klebkraft auf Stahl [N/cm] | 8,3 | 3,7 | 2,7 |
| Klebkraft auf PET [N/cm] | 6,5 | 2,8 | 2,2 |
| Kapillartest [mm/s] | Starke Streuung der Werte < 0,4 | Starke Streuung der Werte < 0,9 | 4 |
| Schneidversuche (8000 Schnitte) | Starke Klebmassereste Abbruch nach 2000 Schnitten | Klebmassereste Abbruch nach 4500 Schnitten | Starke Klebmassereste Abbruch nach 2000 Schnitten |

## Patentansprüche

1. Medizinischer Biosensor, mittels dem biologische Flüssigkeiten untersucht werden, umfassend zumindest drei Schichten, eine Funktionsschicht, auf der ein beidseitig klebendes Haftklebeband aufgebracht ist, auf dem eine strukturierte Folie aufgebracht ist, wobei
die Scherfestigkeit der Klebemasse auf dem Haftklebeband bei 25 °C und 70 °C und einer Gewichtsbelastung von 1000 g größer als 10 000 min ist,
das oder die Polymere der Klebemasse einen K-Wert von größer als 55 aufweisen sowie
die Strukturtiefe der strukturierten Folie 20 bis 150 µm und vorzugsweise 20 bis 80 µm beträgt.

2. Medizinischer Biosensor nach Anspruch 1, **dadurch gekennzeichnet, dass** die Klebemasse aus einem oder mehreren Copolymeren, in denen Acrylat-Monomeren den Hauptbestandteil bilden, besteht.

3. Medizinischer Biosensor nach den Ansprüchen 1 oder 2, **dadurch gekennzeichnet, dass** die Polymere der Haftklebemasse einen K-Wert von größer als 60 haben.

4. Medizinischer Biosensor, nach zumindest einem der Ansprüche 1 bis 3, **dadurch gekennzeichnet, dass** der Mikroscherweg des Haftklebebandes nach 15 min bei 40 °C unter einer Belastung von 500 g kleiner als 100 µm, vorzugsweise kleiner als 60 µm und besonders bevorzugt kleiner als 30 µm ist.

5. Medizinischer Biosensor nach zumindest einem der vorherigen Ansprüche, **dadurch gekennzeichnet, dass** der Quotient der Mikroscherwege µS2/µS1 kleiner als 0,3, vorzugsweise kleiner als 0,2 ist.

6. Medizinischer Biosensor nach zumindest einem der vorherigen Ansprüche, **dadurch gekennzeichnet, dass** die Summe des Klebmasseauftags auf der oberen und der unteren Seite des Haftklebebands höchstens 40 g/m², vorzugsweise höchstens 25 g/m² und besonders bevorzugt höchstens 18 g/m² beträgt.

7. Medizinischer Biosensor nach zumindest einem der vorherigen Ansprüche, **dadurch gekennzeichnet, dass** das Haftklebeband aus einer Trägerfolie vorzugsweise aus Polyester besteht, die beidseitig mit höchstens 20 g/m², vorzugsweise mit höchstens 12,5 g/m² einer Haftklebemasse beschichtet ist.

8. Medizinischer Biosensor nach zumindest einem der vorherigen Ansprüche, **dadurch gekennzeichnet, dass**
die dynamische Glasübergangstemperatur der Klebemasse bei 10 rad/s -10 °C bis 15 °C und bevorzugt -6 °C bis 4 °C beträgt,
die Klebemasse keinerlei Zusätze an Klebharzen oder Weichmachern enthält, die Klebkraft der Klebemasse auf Stahl mindestens 1,5 und vorzugsweise mindestens 2,5 N/cm und/oder
die Klebkraft der Klebemasse auf PET mindestens 1,0 und vorzugsweise mindestens 2,0 N/cm beträgt.

9. Medizinischer Biosensor nach zumindest einem der vorherigen Ansprüche, **dadurch gekennzeichnet, dass** die strukturierte Folie aus Polyester, Polyethylen, Polypropylen, verstrecktem Polypropylen, Polyvinylchlorid, Polyacrylat, Polycarbonat und/oder aus entsprechenden Laminaten oder Coextrudaten besteht.

10. Medizinischer Biosensor nach zumindest einem der vorherigen Ansprüche, **dadurch gekennzeichnet, dass** die Dicke der strukturierten Folie 25 µm bis 150 µm beträgt.

11. Medizinischer Biosensor nach zumindest einem der vorherigen Ansprüche, **dadurch gekennzeichnet, dass** die Folie planar strukturiert ist.

12. Medizinischer Biosensor nach zumindest einem der vorherigen Ansprüche, **dadurch gekennzeichnet, dass** sie Strukturierung aus einem endlosen Kanal mit einer Breite von 20 bis 60 µm und einer Tiefe von 20 bis 60 µm zur Entlüftung des Messraumes des Biosensors besteht, der vorzugsweise senkrecht zum Messraum verläuft.

13. Medizinischer Biosensor nach zumindest einem der vorherigen Ansprüche, **dadurch gekennzeichnet, dass** die strukturierte Folie ein- oder beidseitig hydrophil modifiziert ist.

## Claims

1. Medical biosensor by means of which biological fluids are analyzed, comprising at least three layers: a functional layer, atop which there is a double-sidedly adhesive PSA tape, atop which there is a structured film,
the shear strength of the adhesive on the pressure-sensitive adhesive tape at 25°C and 70°C under a weight load of 1000 g being greater than 10 000 min,
and the polymer or polymers of the adhesive having a K value of greater than 55, and
the structure depth of the structured film being 20 to 150 µm and preferably 20 to 80 µm.

2. Medical biosensor according to claim 1,
**characterized in that** the adhesive is composed of one or more copolymers in which acrylate monomers form the principal constituent.

3. Medical biosensor according to claims 1 or 2, **characterized in that** the polymers of the pressure-sensitive adhesive have a K value of greater than 60.

4. Medical biosensor according to at least one of claims 1 to 3, **characterized in that** the microshear travel of the pressure-sensitive adhesive tape after 15 minutes at 40°C under a load of 500 g is less than 100 µm, preferably less than 60 µm and more preferably less than 30 µm.

5. Medical biosensor according to at least one of the preceding claims, **characterized in that** the ratio of the microshear travels, µS2/µS1, is less than 0.3, preferably less than 0.2.

6. Medical biosensor according to at least one of the preceding claims, **characterized in that** the sum of the adhesive coatweight on the top and bottom sides of the pressure-sensitive adhesive tape is not more than 40 g/m², preferably not more than 25 g/m², and with particular preference not more than 18 g/m².

7. Medical biosensor according to at least one of the preceding claims, **characterized in that** the pressure-sensitive adhesive tape is composed of a carrier foil, preferably of polyester, which is coated on both sides with not more than 20 g/m², preferably with not more than 12.5 g/m², of a pressure-sensitive adhesive.

8. Medical biosensor according to at least one of the preceding claims, **characterized in that**
the dynamic glass transition temperature of the adhesive at 10 rad/s is -10°C to 15°C and preferably -6°C to 4°C,
the adhesive contains no additions at all of tackifier resins or plasticizers, the bond strength of the adhesive to steel is at least 1.5 and preferably at least 2.5 N/cm and/or
the bond strength of the adhesive to PET is at least 1.0 and preferably at least 2.0 N/cm.

9. Medical biosensor according to at least one of the preceding claims, **characterized in that** the structured film is composed of polyester, polyethylene, polypropylene, oriented polypropylene, polyvinyl chloride, polyacrylate, polycarbonate and/or of corresponding laminates or coextrudates.

10. Medical biosensor according to at least one of the preceding claims, **characterized in that** the thickness of the structured film is 25 µm to 150 µm.

11. Medical biosensor according to at least one of the preceding claims, **characterized in that** the film is planarly structured.

12. Medical biosensor according to at least one of the preceding claims, **characterized in that** the structuring consists of a continuous channel with a width of 20 to 60 µm and a depth of 20 to 60 µm for the purpose of removing air from the measuring space of the biosensor, and extends preferably perpendicularly to the measuring space.

13. Medical biosensor according to at least one of the preceding claims, **characterized in that** the structured film is hydrophilically modified on one or both sides.

## Revendications

1. Biodétecteur médical qui permet d'étudier des liquides biologiques, comprenant au moins trois couches, une couche fonctionnelle sur les deux faces de laquelle est appliqué un ruban adhésif sur lequel une feuille structurée est appliquée, dans lequel
la résistance au cisaillement de la pâte adhésive appliquée sur le ruban adhésif, à 25°C et 70°C et sous une sollicitation pondérale de 1 000 g, est supérieure à 10 000 min,
le ou les polymères de la pâte adhésive présentent un indice K supérieur à 55 et
la profondeur de la structure de la feuille structurée est comprise entre 20 et 150 µm et de préférence entre 20 et 80 µm.

2. Biodétecteur médical selon la revendication 1, **caractérisé en ce que** la pâte adhésive est constituée d'un ou plusieurs copolymères dont des monomères d'acrylate forment le composant principal.

3. Biodétecteur médical selon les revendications 1 ou 2, **caractérisé en ce que** les polymères de la pâte adhésive ont un indice K supérieur à 60.

4. Biodétecteur médical selon au moins l'une des revendications 1 à 3, **caractérisé en ce que** le déplacement de microcisaillement du ruban adhésif après 15 min à 40°C et sous une charge de 500 g est inférieur à 100 µm, de préférence inférieur à 60 µm et de façon particulièrement préférable inférieur à 30 µm.

5. Biodétecteur médical selon au moins l'une des revendications précédentes, **caractérisé en ce que** le quotient entre les déplacements de microcisaillement µS2/µS1 est inférieur à 0,3 et de préférence inférieur à 0,2.

6. Biodétecteur médical selon au moins l'une des revendications précédentes, **caractérisé en ce que** la somme des applications d'adhésif sur la face supérieure et sur la face inférieure du ruban adhésif est d'au plus 40 g/m², de préférence d'au plus 25 g/m² et de façon particulièrement préférable d'au plus 18 g/m².

7. Biodétecteur médical selon au moins l'une des revendications précédentes, **caractérisé en ce que** le ruban adhésif est constitué d'une feuille de support, de préférence en polyester, revêtue sur ses deux faces d'au plus 20 g/m² et de préférence d'au plus 12,5 g/m² d'une pâte adhésive.

8. Biodétecteur médical selon au moins l'une des revendications précédentes, **caractérisé en ce que**
la température de transition vitreuse dynamique de la pâte adhésive à 10 rad/s est comprise entre -10°C et 15°C et de préférence entre -6°C et 4°C,
la pâte adhésive ne contient aucun additif de résine ou de plastifiant et la force adhésive de la pâte adhésive sur l'acier est d'au moins 1,5 et de préférence d'au moins 2,5 N/cm et/ou
la force adhésive de la pâte adhésive sur le PET est d'au moins 1,0 et de préférence d'au moins 2,0 N/cm.

9. Biodétecteur médical selon au moins l'une des revendications précédentes, **caractérisé en ce que** la feuille structurée est constituée de polyester, de polyéthylène, de polypropylène, de polypropylène étiré, de poly(chlorure de vinyle), de polyacrylate, de polycarbonate et/ou de leurs stratifiés ou coextrudés.

10. Biodétecteur médical selon au moins l'une des revendications précédentes, **caractérisé en ce que** l'épaisseur de la feuille structurée est comprise entre 25 µm et 150 µm.

11. Biodétecteur médical selon au moins l'une des revendications précédentes, **caractérisé en ce que** la feuille présente une structuration plane.

12. Biodétecteur médical selon au moins l'une des revendications précédentes, **caractérisé en ce que** sa structuration est constituée d'un canal sans fin d'une largeur de 20 à 60 µm et d'une profondeur de 20 à 60 µm, qui sert à évacuer l'air de l'espace de mesure du biodétecteur qui s'étend de préférence perpendiculairement à l'espace de mesure.

13. Biodétecteur médical selon au moins l'une des revendications précédentes, **caractérisé en ce que** la feuille structurée est rendue hydrophile sur une face ou sur ses deux faces.
